# EUROPEAN PATENT SPECIFICATION

(11) **EP 2 642 724 B1**
(45) Date of publication and mention of the grant of the patent: **15.02.2017**
(21) Application number: 11854732.2
(22) Date of filing: 24.12.2011
(51) Int. Cl.: H04L 29/08, H04L 29/06

(54) **FILE DOWNLOADING METHOD AND SYSTEM FOR A TERMINAL**
VERFAHREN UND SYSTEM ZUM HERUNTERLADEN VON DATEIEN FÜR EIN ENDGERÄT
PROCÉDÉ ET SYSTÈME DE TÉLÉCHARGEMENT DE FICHIER POUR UN TERMINAL

(30) Priority: 04.01.2011 CN 201110000636; 24.03.2011 CN 201110072413
(43) Date of publication of application: 25.09.2013
(73) Proprietor: Huawei Device Co., Ltd., Shenzhen, Guangdong 518129 (CN)
(72) Inventor: ZHANG, Qinliang, Shenzhen Guangdong 518129 (CN); WU, Huangwei, Shenzhen Guangdong 518129 (CN); ZHU, Yu, Shenzhen Guangdong 518129 (CN); ZHAO, Junjie, Shenzhen Guangdong 518129 (CN); HE, Zhiqin, Shenzhen Guangdong 518129 (CN)
(74) Representative: Isarpatent
(86) International application number: PCT/CN2011/084602
(87) International publication number: WO 2012/092818

(56) References cited:
- CN-A- 101 674 325
- CN-A- 101 783 735
- CN-A- 102 185 887
- KR-A- 20080 007 945
- US-A1- 2007 154 011
- US-A1- 2008 301 262
- US-B1- 7 516 194

## Description

### TECHINICAL FIELD

The present invention relates to a network communication technology, and in particular, to a file downloading method and system for a terminal.

### BACKGROUND

Set top boxes, STB, Set Top Box, used as terminals, are uniformly managed by a remote management system, RMS, Remote Management System, of an operator. The RMS usually manages the terminals based on a TR-069 protocol, but some STBs do not support the 'TR-069 protocol. For example, for an STB supporting the UPnP, Universal Plug and Play, Universal Plug and Play, protocol, a home gateway, Home Gateway, needs to be used as a proxy and a UPnP control point, CP, Control Point, needs to be deployed on the home gateway to implement conversion between the TR-069 protocol and the UPnP protocol.

An STB capable of implementing Internet Protocol Television, IPTV, demand and Internet, Internet, browse functions has two logical communication interfaces, namely, an IPTV interface and an Internet interface. IPTV service related messages of the STB are communicated through the IPTV interface, and Internet service related messages and device management messages are communicated through the Internet interface. When the STB is upgraded, the STB usually downloads an upgrade file through the Internet interface.

In the process of implementing the STB upgrade, the prior art has at least the following problem: A file server is usually deployed on a network to which the Internet interface is connected; after the RMS sends a file download command to the home gateway, and transmits the file type and URL address as parameters to the home gateway, the home gateway sends the file download command after protocol conversion and the above parameters to the STB; the STB searches, according to the URL address in the parameters through the home gateway, the network to which the default Internet interface is connected, and downloads a file corresponding to the above type.

The file server may also be deployed on a network to which the IPTV interface is connected. If the file server is deployed on the network to which the IPTV interface is connected, when the STB downloads, according to the URL address in the parameters through the home gateway, a file from the network to which the default Internet interface is connected, the problem of download failure may occur because no file can be found.

US 7516194 B1 discloses a method and system for downloading high volumes of content from the Internet without adversely affecting the source of the content or being detected. A director server processes data received from a data source to generate a list of addresses for content to download. The director server assigns a portion of the list of addresses to one or more puller servers. Puller servers initiate requests to download content that corresponds to their assigned list of addresses. A proxy gateway server receives the download request for content, and downloads the content via various Internet Protocol addresses.

### SUMMARY

Embodiments of the present invention provide a file downloading method and system for a terminal, which can avoid the problem of download failure because the terminal cannot find a file when the network where a file server is deployed is not the network to which the default interface of the terminal is connected.

To achieve the preceding objectives, embodiments of the present invention adopt the following technical solutions:

A file downloading method for a terminal includes: sending, by a management device, a file download command to a terminal, where the file download command includes a download channel parameter indicating a network where a file server is deployed on; receiving, by the management device, a file download request message sent by the terminal; selecting, by the management device, a forwarding interface connected to the network which the file server is deployed on, according to download channel indication information in the file download request message, and forwarding, by the management device, the file download request message to the file server through the forwarding interface, where the download channel indication information is set by the terminal according to the download channel parameter; and forwarding a file sent by the file server to the terminal.

A file downloading method for a terminal includes: receiving, by a terminal, a file download command sent by a management device, where the file download command includes a download channel parameter indicating a network where a file server is deployed on; setting, by the terminal, download channel indication information in a file download request message according to the download channel parameter; sending, by the terminal, the file download request message, where the file download request message is forwarded to the file server by the management device through a forwarding interface selected according to the download channel indication information, wherein the forwarding interface is connected to the network which the file server is deployed on; and receiving, by the terminal, a file sent by the file server.

A management device for file downloading includes: a file download command sending module, configured to send a file download command to a terminal, where the file download command includes a download channel parameter indicating a network where a file server is deployed on; a file download request message receiving module, configured to receive a file download request message sent by the terminal; a file download request message forwarding module, configured to select a forwarding interface connected to the network which the file server is deployed on according to download channel indication information in the file download request message, and forward the file download request message to the file server through the forwarding interface, where the download channel indication information is set by the terminal according to the download channel parameter; and a file forwarding module, configured to forward a file sent by the file server to the terminal. -> p. 3a

A terminal for file downloading includes: a file download command receiving module, configured to receive a file download command sent by a management device, where the file download command includes a download channel parameter indicating a network where a file server is deployed on; a download channel indication information setting module, configured to set download channel indication information in a file download request message according to the download channel parameter; a file download request message sending module, configured to send the file download request message, where the file download request message is forwarded to the file server by the management device through a forwarding interface selected according to the download channel indication information, wherein the forwarding interface is connected to the network which the file server is deployed on; and a file receiving module, configured to receive a file sent by the file server.

A file downloading method for a terminal includes: receiving a file download command sent by a management device, where the file download command includes a download channel parameter; and selecting a file download channel according to the download channel parameter in the file download command, and downloading a file through the selected file download channel.

A file downloading system for a terminal includes: a file download command receiving module, configured to receive a file download command sent by a management device, where the file download command includes a download channel parameter; and a file downloading module, configured to select a file download channel according to the download channel parameter in the file download command received by the file download command receiving module, and download a file through the selected download channel.

A file downloading method for a terminal includes: receiving a file download command sent by a management device; selecting a file download channel according to a download channel parameter in a data model; and downloading a file through the selected file download channel.

A file downloading system for a terminal includes: a file download command receiving module, configured to receive a file download command sent by a management device; and a file downloading module, configured to select a file download channel according to a download channel parameter in a data model, and download a file through the selected download channel.

With the file downloading method and system for a terminal according to embodiments of the present invention, the terminal uses a download channel parameter carried in a file download command to set download channel indication information in a file download request message, where the download channel indication information may instruct a management device to select a forwarding interface to forward the file download request message to a correct file server; when the terminal is an STB, the file download request message may be forwarded to the file server from the selected Internet interface or IPTV interface; then the file server sends a file to the STB, which can achieve the purpose of downloading the file from the correct file server by the terminal, thus avoiding the problem that downloading fails because the terminal cannot find the file.

With the file downloading method and system for a terminal according to embodiments of the present invention, the terminal selects a file download channel according to a download channel parameter in a file download command sent by the management device, and downloads a file through the selected file download channel, which can achieve the purpose of downloading the file from the correct file server by the terminal, thus avoiding the problem that downloading fails because the terminal cannot find the file, and improving flexibility of deploying and managing the server system by the operator.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following descriptions show merely some of the embodiments of the present invention, and persons of ordinary skill in the art may still derive other drawings from the accompanying drawings without creative efforts.
FIG. 1 is a flowchart of a file downloading method for a terminal according to Embodiment 1 of the present invention;
FIG. 2 is a block diagram of a file downloading system for a terminal according to Embodiment 1 of the present invention;
FIG. 3 is a flowchart of a file downloading method for a terminal according to Embodiment 2 of the present invention;
FIG. 4 is a block diagram of a file downloading system for a terminal according to Embodiment 2 of the present invention;
FIG. 5 is a flowchart of a file downloading method for a terminal according to Embodiment 3 of the present invention;
FIG. 6 is a block diagram of a file downloading system for a terminal according to Embodiment 3 of the present invention;
FIG. 7 is a flowchart of a file downloading method for a terminal according to Embodiment 5 of the present invention;
FIG. 8 is a block diagram of a file downloading system for a terminal according to Embodiment 5 of the present invention;
FIG. 9 is a flowchart of a file downloading method for a terminal according to Embodiment 6 of the present invention;
FIG. 10 is a block diagram of a file downloading system for a terminal according to Embodiment 6 of the present invention;
FIG. 11 is a flowchart of a file uploading method for a terminal according to Embodiment 7 of the present invention;
FIG. 12 is a block diagram of a file uploading system for a terminal according to Embodiment 7 of the present invention;
FIG. 13 is a flowchart of a file uploading method for a terminal according to Embodiment 8 of the present invention; and
FIG. 14 is a block diagram of a file uploading system for a terminal according to Embodiment 8 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

It is obvious that the described embodiments are merely a part rather than all of the embodiments of the present invention. All other embodiments obtained by persons of ordinary skill in the art based on the embodiments of the present invention without creative efforts shall fall within the protection scope of the present invention.

### Embodiment 1

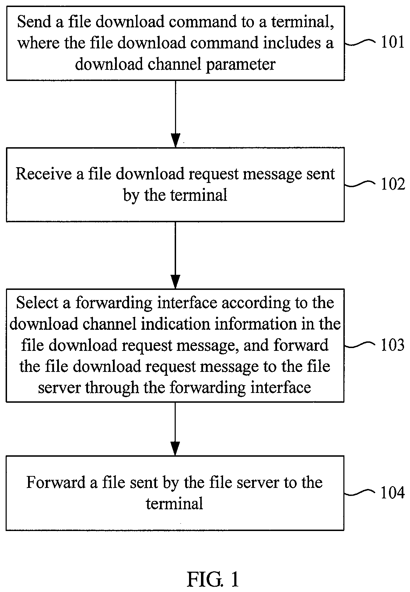

The following describes a file downloading method for a terminal in detail by referring to FIG. 1.

101. Send a file download command to a terminal, where the file download command includes a download channel parameter.

Specifically, when the terminal is an STB having two logical communication interfaces: IPTV and Internet, and the STB does not support the TR-069 protocol, the RMS for managing the terminal based on the TR-069 protocol may perform protocol conversion by using a home gateway as a proxy. The file download command is sent by the home gateway to the STB in a protocol format supported by the STB, instructing the STB to perform a file download operation, where the file download command carries a download channel parameter, where the parameter is used to indicate the location where the file server is deployed, for example, on the network to which the IPTV interface is connected or on the network to which the Internet interface is connected; the STB sets the download channel indication information in the message according to the parameter in the subsequent step of generating a file download request message.

102. Receive a file download request message sent by the terminal.

Specifically, the STB generates a file download request message after receiving the file download command sent by the home gateway, and sends the file download request message to the home gateway, so that the message is forwarded in a correct protocol format through the home gateway. In this step, the STB also sets the download channel indication information in the file download request message according to the download channel parameter carried in the file download command.

103. Select a forwarding interface according to the download channel indication information in the file download request message, and forward the file download request message to the file server through the forwarding interface, where the download channel indication information is set by the terminal according to the download channel parameter.

Specifically, after receiving the file download request message sent by the STB, the home gateway needs to select, according to the download channel indication information in the message, the forwarding interface for forwarding the message, that is, the home gateway needs to determine whether the message is forwarded through the IPTV interface or the Internet interface. After selecting the forwarding interface, the home gateway forwards the message to the file server through the forwarding interface according to the URL address in the file download request message, where the file server is a file server deployed on the network to which the selected interface is connected, and the file for upgrading the terminal is stored on the file server.

104. Forward a file sent by the file server to the terminal.

Specifically, after receiving the file download request message, the file server generates a message carrying a file, and after the file server sends the message to the home gateway, the home gateway forwards the message to the STB, and then the process of downloading the file and upgrading the STB is complete.

It should be noted that the terminal is not limited to the STB described in this embodiment, and may also be other terminal devices used on the network. The device for performing protocol conversion is also not limited to the home gateway, and other management devices having a proxy function may also be used for implementing the present invention.

With the file downloading method for a terminal according to the embodiment of the present invention, the terminal uses a download channel parameter carried in a file download command to set download channel indication information in a file download request message, where the download channel indication information may instruct a management device to select a forwarding interface to forward the file download request message to a correct file server; when the terminal is an STB, the file download request message may be forwarded to the file server from the selected Internet interface or IPTV interface; then the file server sends a file to the STB, which can achieve the purpose of downloading the file from the correct file server, thus avoiding the problem that downloading fails because the terminal cannot find the file, and improving flexibility of deploying and managing the server system by the operator.

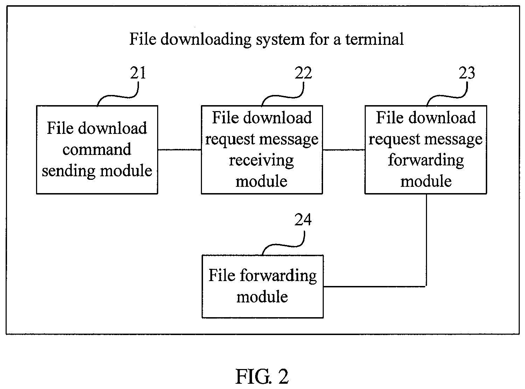

This embodiment also provides a file downloading system for a terminal. As shown in FIG. 2, the system includes: a file download command sending module 21, configured to send a file download command to a terminal, where the file download command includes a download channel parameter; a file download request message receiving module 22, configured to receive a file download request message sent by the terminal; a file download request message forwarding module 23, configured to select a forwarding interface according to download channel indication information in the file download request message, and forward the file download request message to a file server through the forwarding interface, where the download channel indication information is set by the terminal according to the download channel parameter; and a file forwarding module 24, configured to forward a file sent by the file server to the terminal.

The method corresponding to the above modules is described in detail above, and is not further described herein.

In the file downloading system for a terminal in this embodiment, because the terminal sets download channel indication information in the file download request message according to the download channel parameter, the file download request message forwarding module 23 may select a forwarding interface according to the download channel indication information to forward the message to a correct file server; then the file server sends a file to the terminal, which can achieve the purpose of downloading the file from the correct file server by the terminal, thus avoiding the problem that downloading fails because the terminal cannot find the file, and improving flexibility of deploying and managing the server system by the operator.

### Embodiment 2

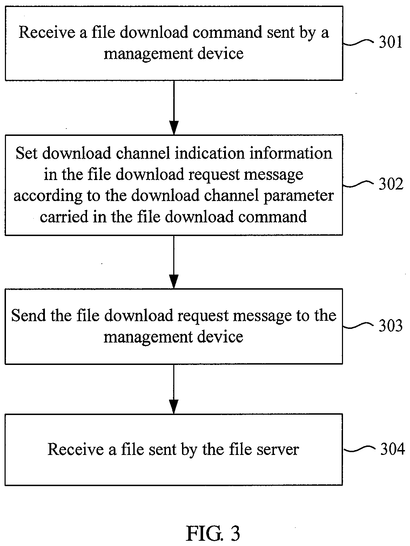

The following describes a file downloading method for a terminal in detail by referring to FIG. 3.

301. Receive a file download command sent by a management device, where the file download command includes a download channel parameter.

Specifically, when the terminal is an STB having two logical communication interfaces: IPTV and Internet, and the STB does not support the TR-069 protocol, the RMS for managing the terminal based on the TR-069 protocol may perform protocol conversion by using a home gateway as a proxy, that is, the management device is a home gateway. The file download command is sent by the home gateway to the STB in a protocol format supported by the STB, instructing the STB to perform a file download operation, where the file download command carries a download channel parameter, where the parameter is used to indicate the location where the file server is deployed, for example, on the network to which the IPTV interface is connected or on the network to which the Internet interface is connected; after receiving the parameter, the STB sets, in the subsequent step of generating a file download request message, the download channel indication information in the generated file download request message according to the parameter.

302. Set download channel indication information in the file download request message according to the download channel parameter.

Specifically, after receiving the file download command sent by the home gateway, the STB generates a file download request message, and sets the download channel indication information in the file download request message according to the download channel parameter carried in the file download command, where the information is used to instruct the home gateway to select a forwarding interface for the message, so that the home gateway forwards the message to the file server through the selected forwarding interface in the subsequent step.

303. Send the file download request message to the management device, where the file download request message is forwarded to the file server by the management device through the forwarding interface selected according to the download channel indication information.

Specifically, the STB sends the file download request message to the home gateway; the home gateway forwards the file download request message to the file server according to the forwarding interface indicated by the download channel indication information and the URL address carried in the message. The file server is a file server deployed on the network to which the selected interface is connected, and the file for upgrading the terminal is stored on the file server.

304. Receive a file sent by the file server.

Specifically, after receiving the file download request message sent by the home gateway, the file server generates a message carrying a file, and after the file server sends the message to the home gateway, the home gateway forwards the message to the STB, and then the process of downloading the file and upgrading the STB is complete.

It should be noted that the terminal is not limited to the STB described in this embodiment, and may also be other terminal devices used on the network. The device for performing protocol conversion is also not limited to the home gateway, and other management devices having the proxy function may also be used for implementing the present invention.

With the file downloading method for a terminal according to the embodiment of the present invention, the terminal uses a download channel parameter carried in a file download command to set download channel indication information in a file download request message, where the download channel indication information may instruct a management device to select a forwarding interface to forward the file download request message to a correct file server; when the terminal is an STB, the file download request message may be forwarded to the file server from the selected Internet interface or IPTV interface; then the file server sends a file to the STB, which can achieve the purpose of downloading the file from the correct file server, thus avoiding the problem that downloading fails because the terminal cannot find the file, and improving flexibility of deploying and managing the server system by the operator.

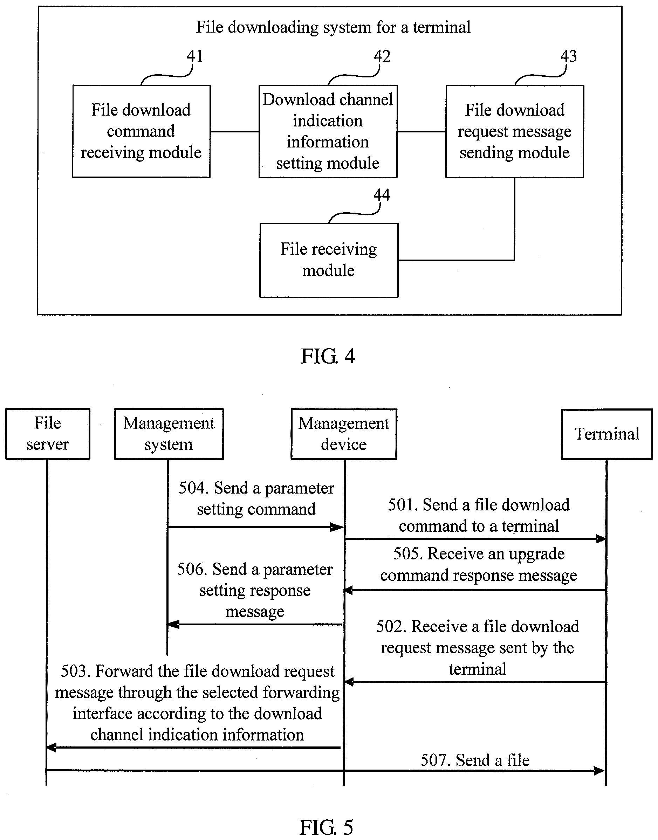

This embodiment also provides a file downloading system for a terminal. As shown in FIG. 4, the system includes: a file download command receiving module 41, configured to receive a file download command sent by a management device, where the file download command includes a download channel parameter; a download channel indication information setting module 42, configured to set download channel indication information in a file download request message according to the download channel parameter; a file download request message sending module 43, configured to send the file download request message, where the file download request message is forwarded to a file server by the management device through a forwarding interface selected according to the download channel indication information; and a file receiving module 44, configured to receive a file sent by the file server.

The method corresponding to the above modules is described in detail above, and is not further described herein.

In the file downloading system for a terminal in this embodiment, because the terminal sets download channel indication information in the file download request message according to the download channel parameter, after the file download request message is sent by the file download request message sending module 43 to the management device, the download channel indication information may instruct the management device to select a forwarding interface for forwarding the file download request message to a correct file server; then the file server generates a message carrying a file, and sends the message to the terminal, which can achieve the purpose of downloading the file from the correct file server by the terminal, thus avoiding the problem that downloading fails because the terminal cannot find the file, and improving flexibility of deploying and managing the server system by the operator.

### Embodiment 3

The following describes a file downloading method for a terminal in detail by referring to FIG. 5.

501. Send a file download command to a terminal, where the file download command includes a download channel parameter.

Specifically, when the terminal is an STB having two logical communication interfaces: IPTV and Internet, and the STB does not support the TR-069 protocol, the RMS for managing the terminal based on the TR-069 protocol may perform protocol conversion by using a home gateway as a proxy. When receiving the file download command of the RMS, the CP on the home gateway invokes the file download command BMS::Download(), instructing the STB to download a file and perform a upgrade operation.

The file download command includes a download channel parameter VLANID, a file address URL, a file type FileType, and so on. The parameters are defined in the following table.

| **Parameter** | **Direction** | **Description** |
|---|---|---|
| FileType | IN | File type |
| URL | IN | File address |
| VLANID | IN | Download channel parameter |
| DownloadStatus | OUT | Download status identifier |
| OperationID | OUT | Download operation identifier |

In the table, the value of FileType may be:
1. Firmware Upgrade Image, firmware upgrade version file;
2. Web Content, Web content; or
3. Vendor Configuration File, vendor configuration file.

VLANID is a download channel parameter. Because the file server may be deployed on the network to which the IPTV interface on the STB is connected, and may also be deployed on the network to which the Internet interface on the STB is connected, the download channel parameter VLANID may be set to indicate the location where the file server is deployed.

The file type FileType, file address URL, and download channel parameter VLANID are input parameters of the file download command. The download status identifier DownloadStatus and download operation identifier OperationID are return parameters of the file download command.

The VLANID may be set by the management system, such as an RMS, by using a parameter setting command. Specifically, before the home gateway sends the file download command BMS::Download() to the STB, the management system executes step 504 to send the parameter setting command SetParameterValues() to the home gateway, and the home gateway sets node parameters of the command BMS::Download by using the SetParameterValues RPC method. The node parameters include an invoke identifier InvokeAction, a file type FileType, a file address URL, a download channel parameter VLANID, and so on.

Before the RMS sends the parameter setting command, the BMS::Download command and parameters of the STB are already mapped to the data model of the home gateway, where the data model is shown in the following table. When the RMS needs to send a file download command to the STB, the RMS sets the node parameters: InvokeAction, FileType, URL, and VLANID under the Download node in the gateway data model.

| **Name** | **Type** | **Read/Write** | **Description** |
|---|---|---|---|
| InternetGatewayDevic e.ProxyDevice. {i}.De viceList. {i}.ActionList .BMS.Download. | SingleInstance | - | |
| InvokeAction | boolean | W | Whether to invoke the parameters of the Download command |
| FileType | String | W | File type |
| URL | String | W | File address |
| VLANID | Int | W | Download channel parameter |
| DownloadStatus | unsignedInt | W | Download status identifier |
| OperationID | unsignedInt | W | Download operation identifier |

In the table, when InvokeAction is set to 1, it indicates that the BMS::Download() command needs to be invoked.

It should be noted that the method for setting a download channel parameter is not limited to the method described in this embodiment, and that any other method for setting a parameter in the home gateway may be used to implement the present invention.

502. Receive a file download request message sent by the terminal.

Specifically, the STB generates a file download request message after receiving the file download command BMS::Download() sent by the home gateway, and sends the file download request message to the home gateway, so that the home gateway forwards the message in a correct protocol format after receiving the message. In this step, the STB also sets the download channel indication information in the file download request message according to the download channel parameter carried in the file download command.

503. Select a forwarding interface according to the download channel indication information in the file download request message, and forward the file download request message to the file server through the forwarding interface, where the download channel indication information is set by the terminal according to the download channel parameter.

Specifically, after receiving the file download request message sent by the STB, the home gateway needs to select, according to the download channel indication information in the message, the forwarding interface for forwarding the message, that is, the home gateway needs to determine whether the message is forwarded through the IPTV interface or the Internet interface. After selecting the forwarding interface, the home gateway forwards the message to the file server through the forwarding interface according to the URL address in the file download request message, where the file server is a file server deployed on the network to which the selected interface is connected, and the file for upgrading the terminal is stored on the file server.

The method for setting download channel indication information may be as follows: The STB adds a download channel identifier to the file download request message according to the download channel parameter VLANID, where the download channel identifier has at least two identifier values corresponding to different forwarding interfaces. Selecting a corresponding forwarding interface by the home gateway according to the download channel indication information includes: selecting a forwarding interface corresponding to an identifier value of the download channel identifier.

For example, when the value of the download channel identifier is 85, the home gateway selects the IPTV interface to forward the file download request message; when the value of the download channel identifier is 70, the home gateway selects the Internet interface to forward the file download request message. If the download channel parameter VLANID=85, the terminal adds a download channel identifier whose value is 85 to the file download request message such as HTTP GET; after the message arrives at the home gateway, the home gateway selects the IPTV interface to forward the file download request message. If VLANID=70, the terminal adds a download channel identifier whose value is 70 to the file download request message such as HTTP GET; after the message arrives at the home gateway, the home gateway selects the Internet interface to forward the file download request message.

For another example, the home gateway may distinguish different service channels by using the priority of the file download request message, where the priority of the file download request message is indicated by a priority identifier. When the priority identifier is equal to 1, the home gateway selects the IPTV interface to forward the file download request message; when the priority identifier is equal to 0, the home gateway selects the Internet interface to forward the file download request message. In this case, the download channel parameter VLANID included in the file download command needs to be changed to Priority, and the STB changes the priority identifier in the file download request message according to the value of Priority. If the download channel parameter Priority=1, the terminal changes the priority identifier of the file download request message such as HTTP GET to 1; after the message arrives at the home gateway, the home gateway selects the IPTV interface to forward the file download request message. If Priority=0, the terminal changes the priority identifier of the file download request message such as HTTP GET to 0; after the message arrives at the home gateway, the home gateway selects the Internet interface to forward the file download request message.

Certainly, the number of forwarding interfaces is not limited to the above two, IPTV interface and Internet interface, and may be more than two; each forwarding interface may correspond to an identifier value of a download channel identifier, and the management device, such as a home gateway, may select the corresponding forwarding interface according to the identifier value.

The method for setting download channel indication information may also be as follows: When the download channel parameter indicates a default forwarding interface, the STB does not add a download channel identifier to the file download request message; when the download channel parameter indicates a non-default forwarding interface, the STB adds a corresponding download channel identifier to the file download request message. The selecting a corresponding forwarding interface by the home gateway according to the download channel indication information includes: selecting a default forwarding interface when the file download request message does not include a download channel identifier; or selecting a non-default forwarding interface corresponding to the download channel identifier when the file download request message includes a download channel identifier.

For example, when the value of the download channel identifier is 85, the home gateway selects a non-default IPTV interface to forward the file download request message; when there is no download channel identifier, the home gateway selects the default Internet interface to forward the file download request message. If VLANID=85, the terminal adds a download channel identifier whose value is 85 to the file download request message such as HTTP GET; after the message arrives at the gateway, the gateway selects the IPTV interface to forward the file download request message. If VLANID=-1, the terminal does not add a download channel identifier to the file download request message such as HTTP GET; after the message arrives at the gateway, the gateway selects the default Internet interface to forward the file download request message.

It should be noted that the terminal is not limited to the STB described in this embodiment, and may also be other terminal devices used on the network. The device for performing protocol conversion is also not limited to the home gateway, and other management devices having the proxy function may also be used for implementing the present invention. The management system may be an RMS. The method for setting download channel indication information and the method for selecting a forwarding interface by the home gateway are not limited to the above two methods, and any other method can be used for implementing the present invention as long as the method can achieve the purpose of setting download channel indication information in the file download request message and the purpose of enabling the management device, such as a home gateway, to select a forwarding interface according to the information.

The download channel parameter in this embodiment may also be a service channel identifier ServiceChannel or a communication interface identifier InterfaceType.

The service channel identifier ServiceChannel indicates the specific download channel for message transmission, and when its value is "IPTV", it indicates that the file download request message is forwarded by the IPTV interface; when the value of the service channel identifier ServiceChannel is "Internet", it indicates that the file download request message is forwarded by the Internet interface.

For example, when the value of the download channel identifier is 85, the home gateway selects the IPTV interface to forward the file download request message; when there is no download channel identifier, the gateway selects the Internet interface to forward the file download request message. If ServiceChannel=IPTV, the STB adds a download channel identifier whose value is 85 to the file download request message such as HTTP GET; after the message arrives at the gateway, the gateway selects the IPTV interface to forward the file download request message. If ServiceChannel=Internet, the STB does not set a download channel identifier in the file download request message such as HTTP GET; after the message arrives at the gateway, the gateway selects the Internet interface to forward the file download request message.

When the home gateway selects different forwarding interfaces according to different identifier values of the download channel identifier, the STB may add the corresponding download channel identifier to the file download request message according to the mapping relationship between the download channel parameter and the forwarding interface. The specific setting method is described in detail above, and is not further described herein.

The communication interface identifier InterfaceType indicates the communication interface through which the STB sends the file download request message, and when its value is "PPPoE", it indicates that the download message is sent through the PPPoE interface; when the value of the communication interface identifier InterfaceType is "DHCP", it indicates that the download message is sent through the DHCP interface.

Specifically, when the value of the download channel identifier is 85, the home gateway selects the IPTV interface to forward the file download request message; when there is no download channel identifier, the home gateway selects the Internet interface to forward the file download request message. If InterfaceType=PPPoE, the STB adds a download channel identifier whose value is 85 to the file download request message such as HTTP GET; after the message arrives at the gateway, the gateway selects the IPTV interface to forward the file download request message. If InterfaceType=DHCP, the STB does not set a download channel identifier in the file download request message such as HTTP GET; after the message arrives at the gateway, the gateway selects the Internet interface to forward the file download request message.

When the home gateway selects different forwarding interfaces according to different identifier values of the download channel identifier, the STB may add the corresponding download channel identifier to the file download request message according to the mapping relationship between the download channel parameter and the forwarding interface. The specific setting method is described in detail above, and is not further described herein.

507. Forward a file sent by the file server to the terminal.

Specifically, after receiving the file download request message, the file server generates a message carrying a file, and after the file server sends the message to the home gateway, the home gateway forwards the message to the STB, and then the process of downloading the file and upgrading the STB is complete.

With the file downloading method for a terminal according to this embodiment, the terminal uses a download channel parameter carried in a file download command to set download channel indication information in a file download request message, where the download channel indication information may instruct a management device to select a forwarding interface to forward the file download request message to a correct file server; when the terminal is an STB, the file download request message may be forwarded to the file server from the selected Internet interface or IPTV interface; then the file server sends a file to the STB, which can achieve the purpose of downloading the file from the correct file server, thus avoiding the problem that downloading fails because the terminal cannot find the file, and improving flexibility of deploying and managing the server system by the operator.

Before receiving the file download request message sent by the terminal, this embodiment may further include the following steps:
505. Receive a file download command response message, where the file download command response message is generated after the terminal responds to the file download command.

Specifically, after receiving the file download command BMS::Download() sent by the home gateway, the terminal generates a file download command response message BMS::Download() resp, and sends the message to the home gateway, where the message carries a download status identifier DownloadStatus and a download operation identifier OperationID.

The download status identifier DownloadStatus indicates the current download status of the terminal, and its data type is an unsigned integer; when its value is "0", it indicates that the STB already downloads and applies the terminal upgrade file; when its value is "1 ", it indicates that the STB is downloading or already downloads but does not apply the file.

The download operation identifier OperationID indicates the ID of the current download operation, and the data type is an unsigned integer. The CP in the home gateway afterward queries the status update of the current download by using the download operation identifier.

The home gateway may learn, through the file download command response message BMS::Download() resp, whether the terminal correctly receives the file download command and the upgrade status of the terminal.

506. Generate a parameter setting response message according to the file download command response message, and send the parameter setting response message to the management system.

Specifically, after receiving the file download command response message BMS::Download() resp, the home gateway generates a parameter setting response message SetParameterValues() resp according to the status information in the message, and sends the message to the management system in response to the SetParameterValues() RPC command, so that the management system is notified whether the terminal correctly receives the file download command and notified of the upgrade status of the terminal.

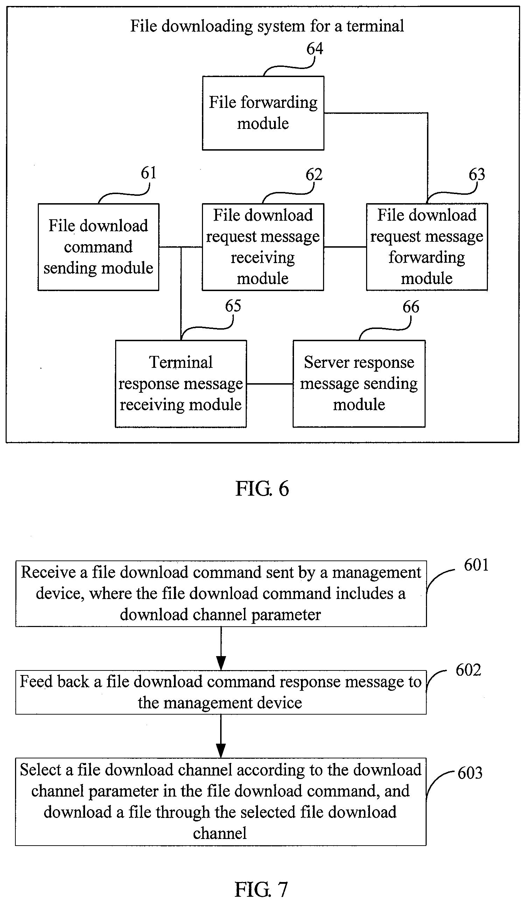

This embodiment also provides a file downloading system for a terminal. As shown in FIG. 6, the system includes: a file download command sending module 61, configured to send a file download command to a terminal, where the file download command includes a download channel parameter; a file download request message receiving module 62, configured to receive a file download request message sent by the terminal; a file download request message forwarding module 63, configured to select a forwarding interface according to download channel indication information in the file download request message, and forward the file download request message to a file server through the forwarding interface, where the download channel indication information is set by the terminal according to the download channel parameter; and a file forwarding module 64, configured to forward a file sent by the file server to the terminal.

The download channel parameter in the above system may be set by the management system by using a parameter setting command, and the download channel parameter may be a virtual local area network identifier or a service channel identifier or a communication interface identifier.

The method corresponding to the above modules is described in detail above, and is not further described herein.

The file downloading system may further include but is not limited to: a terminal response message receiving module 65, configured to receive a file download command response message sent by the management system, where the file download command response message is generated after the terminal responds to the file download command; and a server response message sending module 66, configured to generate a parameter setting response message according to the file download command response message, and send the parameter setting response message to the management system.

In the file downloading system for a terminal in this embodiment, because the terminal sets download channel indication information in the file download request message according to the download channel parameter, the file download request message forwarding module 63 may select a forwarding interface according to the download channel indication information to forward the message to a correct file server; then the file server sends a file to the terminal, which can achieve the purpose of downloading the file from the correct file server by the terminal, thus avoiding the problem that downloading fails because the terminal cannot find the file, and improving flexibility of deploying and managing the server system by the operator.

### Embodiment 4

This embodiment, improved on the basis of Embodiment 2, provides a file downloading method for a terminal, where the method includes: receiving a file download command sent by a management device, where the file download command includes a download channel parameter; setting download channel indication information in a file download request message according to the download channel parameter; sending the file download request message, where the file download request message is forwarded to a file server by the management device through a forwarding interface selected according to the download channel indication information; and receiving a file sent by the file server.

The above steps are the same as those of the method in Embodiment 2, and are not further described herein.

In the file downloading method for a terminal according to this embodiment, the method for setting download channel indication information may be: adding a download channel identifier to the file download request message according to the download channel parameter, where the download channel identifier has at least two identifier values corresponding to different forwarding interfaces. Selecting, by the management device, a forwarding interface for the file download request message includes: selecting, by the management device, a forwarding interface corresponding to the identifier value of the download channel identifier.

In addition, the method for setting download channel indication information may also be: when the download channel parameter indicates a default forwarding interface, not adding a download channel identifier to the file download request message; when the download channel parameter indicates a non-default forwarding interface, adding a corresponding download channel identifier to the file download request message. The selecting, by the management device, a forwarding interface for the file download request message includes: selecting, by the management device, a default forwarding interface when the file download request message does not include a download channel identifier; or selecting, by the management device, a non-default forwarding interface corresponding to the download channel identifier when the file download request message includes a download channel identifier.

The method for setting download channel indication information and the method for selecting a forwarding interface by the home gateway are already described in detail in Embodiment 3, and are not further described herein.

This embodiment also provides a file downloading system for a terminal, where the system includes: a file download command receiving module, configured to receive a file download command sent by a management device, where the file download command includes a download channel parameter; a download channel indication information setting module, configured to set download channel indication information in a file download request message according to the download channel parameter; a file download request message sending module, configured to send the file download request message, where the file download request message is forwarded to a file server by the management device through a forwarding interface selected according to the download channel indication information; and a file receiving module, configured to receive a file sent by the file server.

The functions implemented by the above modules are the same as those described in Embodiment 2, and are not further described herein.

In the above file downloading system for a terminal, the download channel indication information setting module may set the download channel indication information according to the following method: adding a download channel identifier to the file download request message according to the download channel parameter, where the download channel identifier has at least two identifier values corresponding to different forwarding interfaces. The management device selects a forwarding interface according to the following method: selecting, by the management device, a forwarding interface corresponding to an identifier value of the download channel identifier.

In addition, the download channel indication information setting module may set the download channel indication information according to the following method: when the download channel parameter indicates a default forwarding interface, not adding a download channel identifier to the file download request message; or when the download channel parameter indicates a non-default forwarding interface, adding a corresponding download channel identifier to the file download request message. The management device selects a forwarding interface according to the following method: selecting, by the management device, a default forwarding interface when the file download request message does not include a download channel identifier; or selecting, by the management device, a non-default forwarding interface corresponding to the download channel identifier when the file download request message includes a download channel identifier.

The method for setting download channel indication information and the method for selecting a forwarding interface by the home gateway are already described in detail in Embodiment 3, and are not further described herein.

It should be noted that the method for setting download channel indication information and the method for selecting a forwarding interface by the home gateway are not limited to the above two methods, and that any other method can be used for implementing the present invention as long as the method can achieve the purpose of setting download channel indication information in the file download request message and the purpose of enabling the management device to select a forwarding interface according to the information.

In the file downloading method and system for a terminal according this embodiment, the download channel parameter is set by the management system by using the parameter setting command, which is not limited, and the download channel parameter is but is not limited to a virtual local area network identifier, a service channel identifier, or a communication interface identifier.

In this embodiment, the terminal uses a download channel parameter carried in a file download command to set download channel indication information in a file download request message, where the download channel indication information may instruct a management device to select a forwarding interface to forward the file download request message to a correct file server; then the file server sends a file to the terminal, which can achieve the purpose of downloading the file from the correct file server, thus avoiding the problem that downloading fails because the terminal cannot find the file, and improving flexibility of deploying and managing the server system by the operator.

### Embodiment 5

In this embodiment, when the terminal is a home gateway having two logical communication interfaces: IPTV and Internet, because the home gateway may support the TR-069 protocol, the home gateway may directly perform a file download operation; herein the management device may be directly an RMS, as shown in FIG. 7.

601. Receive a file download command sent by a management device, where the file download command includes a download channel parameter.

Specifically, in this embodiment, the home gateway receives the file download command sent by the management device through the TR-069 protocol, that is, by extending a download channel parameter in parameters of the file download command Download() RPC in the TR-069 protocol, where the download channel parameter indicates the download channel through which the home gateway downloads a file. In this embodiment, the download channel parameter may be regarded as download channel indication information, and is used to indicate the file download channel, where the parameters of the file download command Download() RPC are described in the following table:

| **Parameter Name** | **Description** |
|---|---|
| CommandKey | Used to distinguish a specific download operation |
| FileType | Type of a file to be downloaded |
| URL | Address of the file to be downloaded |
| Username | Username for logging in to the server where the file to be downloaded is located |
| Password | Password for logging in to the server where the file to be downloaded is located |
| FileSize | Size of the file to be downloaded |
| TargetFileName | File name of the file to be downloaded |
| DelaySeconds | Delay time of file downloading |
| SuccessURL | URL used when file downloading succeeds |
| FailureURL | URL used when file downloading fails |
| Channel | Channel used when the file is downloaded |

The Channel parameter, namely, a file download channel parameter, may be indicated by different identifiers:
(1) a VLAN identifier, where different VLAN identifiers indicate different file download channels;
(2) a service channel identifier, where different service channel identifiers indicate different file download channels, for example, Channel="IPTV", indicating that the file download channel is an IPTV service channel, and Channel="Internet", indicating that the file download channel is an Internet service channel;
(3) a communication interface identifier, where different communication interfaces indicate different file download channels, for example, Channel="PPPoE", indicating that the file download channel is a channel where a PPPoE interface is located, and Channel="DHCP", indicating that the file download channel is a channel where a DHCP interface is located;
(4) a priority identifier, where different priority identifiers indicate different file download channels, for example, the priority may include the priority of quality of service; and
(5) a physical interface identifier, where different physical interface identifiers indicate different file download channels, for example, "ADSL", indicating that the file download channel is an ADSL channel, and "3G", indicating that the file download channel is a 3G channel.

602. Feed back a file download command response message to the management device.

603. Select a file download channel according to the download channel parameter in the file download command, and download a file through the selected file download channel. In this embodiment, the home gateway may select a file download channel according to the Channel parameter in the file download command, then send a file download request to the file address URL through the selected file download channel, and receive the downloaded file through the file download channel. In this embodiment, the file may be a configuration file or a log file, and certainly, may also be other files. Herein the file is only an example and is not limited.

In this embodiment, the terminal selects a file download channel according to the download channel parameter in the file download command sent by the management device, and downloads a file through the selected file download channel, which can achieve the purpose of downloading the file from the correct file server by the terminal, thus avoiding the problem that downloading fails because the terminal cannot find the file, and improving flexibility of deploying and managing the server system by the operator.

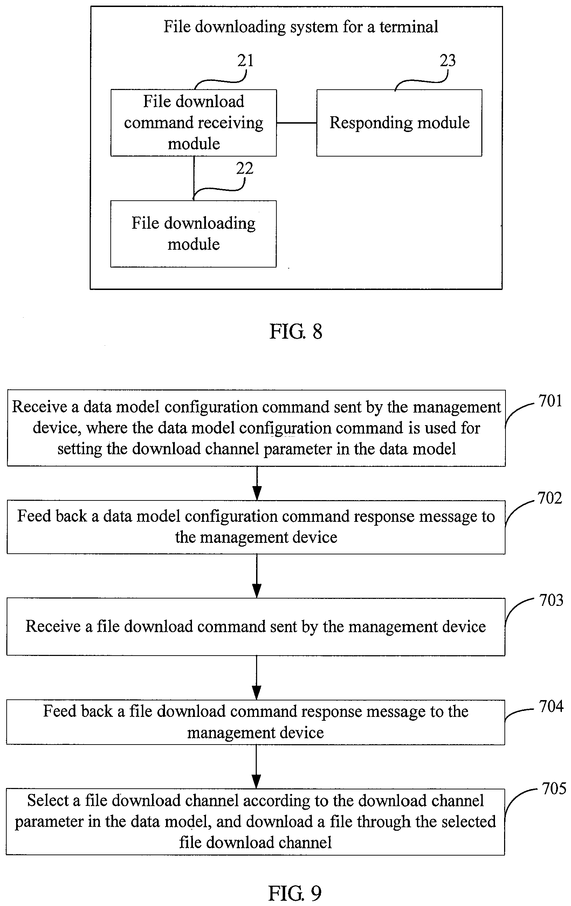

This embodiment also provides a file downloading system for a terminal, as shown in FIG. 8, where the system includes: a file download command receiving module 21, configured to receive a file download command sent by a management device, where the file download command includes a download channel parameter; a file downloading module 22, configured to select a file download channel according to the download channel parameter in the file download command received by the file download command receiving module 21, and download a file through the selected download channel; and a responding module 23, configured to feed back a file download command response message to the management device after the file download command receiving module 21 receives the file download command sent by the management device.

The method corresponding to the above modules is described in detail above, and is not further described herein.

### Embodiment 6

In this embodiment, when the terminal is a home gateway having two logical communication interfaces: IPTV and Internet, because the home gateway may support the TR-069 protocol, the home gateway may directly perform a file download operation; herein the management device may be directly an RMS, as shown in FIG. 9.

In this embodiment, a data model configuration command may also be used to set the download channel parameter in the data model. In this embodiment, the download channel parameter in the data model may be set through the management device, or the download channel parameter in the data model may be set through the local WEB interface, or the download channel parameter in the data model may be set in a factory presetting mode, or the download channel parameter in the data model may be set through a USB interface. In this embodiment, the method for setting the download channel parameter in the data model is not limited.

For better understanding, in this embodiment, the method for setting the download channel parameter in the data model through the management device is used as an example for description.

701. Receive a data model configuration command sent by the management device, where the data model configuration command is used for setting the download channel parameter in the data model.

In this embodiment, the home gateway receives the data model configuration command sent by the management device through the TR-069 protocol, and adds a download channel parameter to the data model to indicate the file download channel, where the download channel parameter indicates the download channel for downloading a file by the home gateway. In this embodiment, the download channel parameter may be regarded as download channel indication information, used to indicate the file download channel. The data model configuration command SetParameterValues() is described in the following table:

| **Name** | **Writable or Not** | **Description** |
|---|---|---|
| InternetGatewayDevice.Download. | - | File download object |
| Channel | W | Channel used when the file is downloaded |

The file download channel parameter Channel may be indicated by different identifiers, including:
(1) a VLAN identifier, where different VLAN identifiers indicate different file download channels;
(2) a service channel identifier, where different service channel identifiers indicate different file download channels, for example, Channel="IPTV", indicating that the file download channel is an IPTV service channel, and Channel="Internet", indicating that the file download channel is an Internet service channel;
(3) a communication interface identifier, where different communication interfaces indicate different file download channels, for example, Channel="PPPoE", indicating that the file download channel is a channel where a PPPoE interface is located, and Channel="DHCP", indicating that the file download channel is a channel where a DHCP interface is located;
(4) a priority identifier, where different priority identifiers indicate different file download channels, for example, the priority may include the priority of quality of service; and
(5) a physical interface identifier, where different physical interface identifiers indicate different file download channels, for example, "ADSL", indicating that the file download channel is an ADSL channel, and "3G", indicating that the file download channel is a 3G channel.

702. Feed back a data model configuration command response message to the management device.

In this embodiment, if the home gateway already sets the download channel parameter, steps 701 and 702 do not need to be executed, and therefore the two steps are optional.

703. Receive a file download command sent by the management device. In this embodiment, the home gateway receives the file download command sent by the management device through the TR-069 protocol. In this embodiment, the file may be a configuration file or a log file, and certainly, may also be other files. Herein the file is only an example and is not limited.

704. Feed back a file download command response message to the management device.

705. Select a file download channel according to the download channel parameter in the data model, and download a file through the selected file download channel.

In this embodiment, because the download channel parameter may include: a virtual local area network identifier or a service channel identifier or a communication interface identifier or a priority identifier or a physical interface identifier, the home gateway may select the corresponding download channel according to the content in the download channel parameter.

In this embodiment, the home gateway may select a file download channel according to the download channel parameter in the data model, then send a file download request to the file address URL through the selected file download channel, and receive the downloaded file through the file download channel.

In this embodiment, the terminal selects a file download channel according to the download channel parameter in the data model set by the management device, and downloads a file through the selected file download channel, which can achieve the purpose of downloading the file from the correct file server by the terminal, thus avoiding the problem that downloading fails because the terminal cannot find the file, and improving flexibility of deploying and managing the server system by the operator.

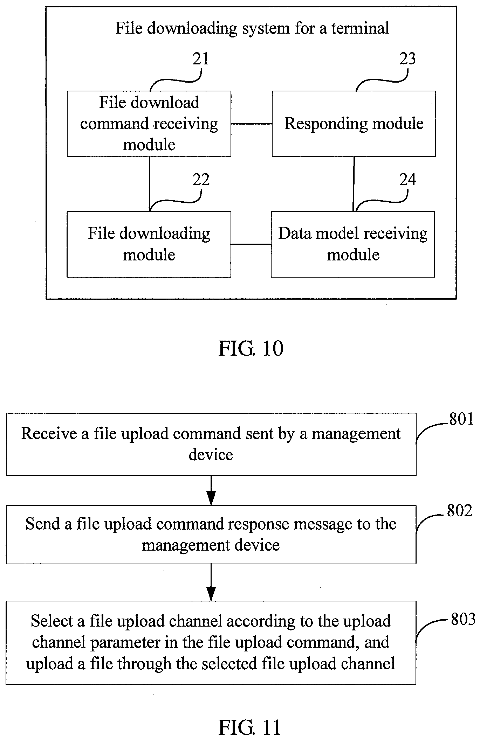

This embodiment also provides a file downloading system for a terminal, as shown in FIG. 10, where the system includes: a data model receiving module 24, configured to receive a data model configuration command sent by a management device, where the data model configuration command is used for setting a download channel parameter in a data model; a file download command receiving module 21, configured to receive a file download command sent by the management device; a file downloading module 22, configured to select a file download channel according to the download channel parameter in the data model configuration command received by the data model receiving module 24, and download a file through the selected download channel; and a responding module 23, configured to feed back a data model configuration command response message to the management device after the data model receiving module 24 receives the data model configuration command sent by the management device; and further configured to feed back a file download command response message to the management device after the file download command receiving module 21 receives the file download command sent by the management device.

The method corresponding to the above modules is described in detail above, and is not further described herein.

### Embodiment 7

In the above embodiment, the terminal may download a file according to a selected download channel, and correspondingly, the terminal may upload a file according to a selected upload channel, as shown in FIG. 11.

In this embodiment, the home gateway is used as a terminal for description. In this embodiment, the home gateway has two communication interfaces; the RMS directly manages the home gateway without using other devices as a proxy; the ACS directly manages the home gateway through a remote management protocol, such as the TR-069 protocol. In this embodiment, the file upload channel is specified in the Upload() RPC in the TR-069 protocol.

801. Receive a file upload command sent by a management device, where the file upload command includes an upload channel parameter. In this embodiment, the home gateway receives the file upload command sent by the management device through the TR-069 protocol, and adds an upload channel parameter to the file upload command to indicate the file upload channel, where the upload channel parameter indicates the upload channel of uploading a file by the home gateway. In this embodiment, the upload channel parameter may be regarded as upload channel indication information, used to indicate the file upload channel. Upload() RPC is described in the following table:

| **Parameter Name** | **Description** |
|---|---|
| CommandKey | Used to distinguish a specific upload operation |
| FileType | Type of a file to be uploaded |
| URL | Address of the file to be uploaded |
| Username | Username for logging in to the upload file server |
| Password | Password for logging in to the upload file server |
| DelaySeconds | Delay time of file uploading |
| Channel | Channel used when the file is uploaded |

The file upload channel parameter Channel may be indicated by different identifiers, including:
(1) a VLAN identifier, where different VLAN identifiers indicate different file upload channels;
(2) a service channel identifier, where different service channel identifiers indicate different file upload channels, for example, Channel="IPTV", indicating that the file upload channel is an IPTV service channel, and Channel="Internet", indicating that the file upload channel is an Internet service channel;
(3) a communication interface identifier, where different communication interfaces indicate different file upload channels, for example, Channel="PPPoE", indicating that the file upload channel is a channel where a PPPoE interface is located, and Channel="DHCP", indicating that the file upload channel is a channel where a DHCP interface is located;
(4) a priority identifier, where different priority identifiers indicate different file upload channels, for example, the priority may include the priority of quality of service; and
(5) a physical interface identifier, where different physical interface identifiers indicate different file upload channels, for example, "ADSL", indicating that the file upload channel is an ADSL channel, and "3G", indicating that the file upload channel is a 3G channel.

802. Send a file upload command response message to the management device.

803. Select a file upload channel according to the upload channel parameter in the file upload command, and upload a file through the selected file upload channel. In this embodiment, the home gateway may select a file upload channel according to the Channel parameter in the file upload command, and then upload a file according to the selected file upload channel. In this embodiment, the file may be a configuration file or a log file, and certainly, may also be other files. Herein the file is only an example and is not limited.

In this embodiment, the terminal selects a file upload channel according to the upload channel parameter in the file upload command sent by the management device, and uploads a file to the management device through the selected file upload channel, which can achieve the purpose of uploading the file to the correct file server by the terminal, thus improving flexibility of deploying and managing the server system by the operator.

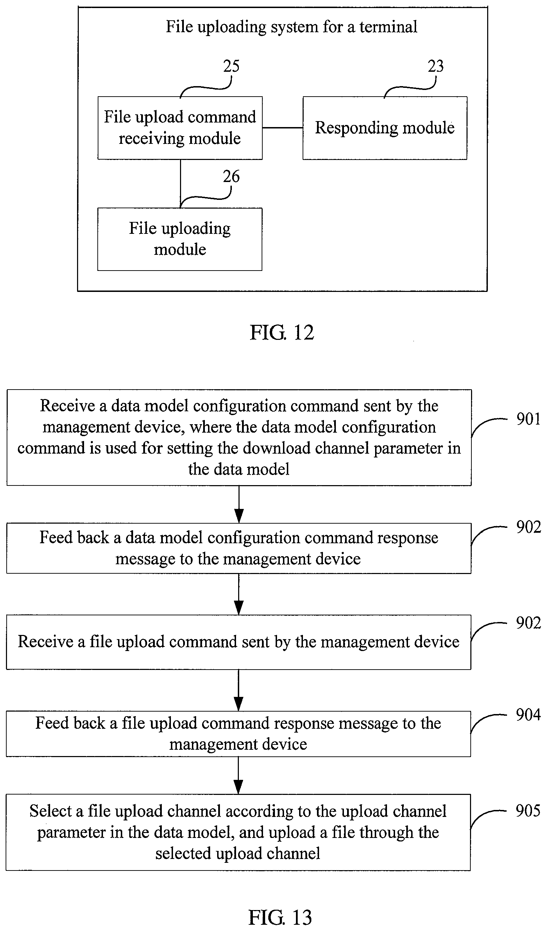

This embodiment also provides a file uploading system for a terminal, as shown in FIG. 12, where the system includes: a file upload command receiving module 25, configured to receive a file upload command sent by a management device, where the file upload command includes an upload channel parameter; a file uploading module 26, configured to select a file upload channel according to the upload channel parameter in the file upload command received by the file upload command receiving module 25, and upload a file through the selected upload channel; and a responding module 23, configured to feed back a file upload command response message to the management device after the file upload command receiving module 25 receives the file upload command sent by the management device.

The method corresponding to the above modules is described in detail above, and is not further described herein.

### Embodiment 8

In this embodiment, the terminal may be notified of the file upload channel by setting a data model.

In this embodiment, a data model configuration command may be used to set an upload channel parameter in a data model. In this embodiment, the upload channel parameter in the data model may be set through the management device, or the upload channel parameter in the data model may be set through the local Web interface, or the upload channel parameter in the data model may be set in a factory presetting mode, or the upload channel parameter in the data model may be set through a USB interface. In this embodiment, the method for setting the upload channel parameter in the data model is not limited.

In this embodiment, the home gateway is still used as an example, as shown in FIG. 13.

In this embodiment, when the terminal is a home gateway having two logical communication interfaces: IPTV and Internet, because the home gateway may support the TR-069 protocol, the home gateway may directly perform a file upload operation; herein the management device may be an RMS.

901. Receive a data model configuration command sent by the management device, where the data model configuration command is used for setting the upload channel parameter in the data model.

In this embodiment, the home gateway receives the data model configuration command sent by the management device through the TR-069 protocol, and adds a parameter to the data model to indicate the file upload channel, where the upload channel parameter indicates the upload channel of uploading a file by the home gateway. In this embodiment, the upload channel parameter may be regarded as upload channel indication information, used to indicate the file upload channel. The data model configuration command SetParameterValues() is described in the following table:

| **Name** | **Writable or Not** | **Description** |
|---|---|---|
| InternetGatewayDevice.Upload. | - | File upload object |
| Channel | W | Channel used when the file is uploaded |

The file upload channel parameter Channel may be indicated by different identifiers, including:
(1) a VLAN identifier, where different VLAN identifiers indicate different file upload channels;
(2) a service channel identifier, where different service channel identifiers indicate different file upload channels, for example, Channel="IPTV", indicating that the file upload channel is an IPTV service channel, and Channel="Internet", indicating that the file upload channel is an Internet service channel;
(3) a communication interface identifier, where different communication interfaces indicate different file upload channels, for example, Channel="PPPoE", indicating that the file upload channel is a channel where a PPPoE interface is located, and Channel="DHCP", indicating that the file upload channel is a channel where a DHCP interface is located;
(4) a priority identifier, where different priority identifiers indicate different file upload channels, for example, the priority may include the priority of quality of service; and
(5) a physical interface identifier, where different physical interface identifiers indicate different file upload channels, for example, "ADSL", indicating that the file upload channel is an ADSL channel, and "3G", indicating that the file upload channel is a 3G channel.

902. Feed back a data model configuration command response message to the management device.

In this embodiment, if the home gateway already sets the upload channel parameter, steps 901 and 902 do not need to be executed, and therefore the two steps are optional.

903. Receive a file upload command sent by the management device. In this embodiment, the home gateway receives the file upload command sent by the management device through the TR-069 protocol. In this embodiment, the file may be a configuration file or a log file, and certainly, may also be other files. Herein the file is only an example and is not limited.

904. Feed back a file upload command response message to the management device.

905. Select a file upload channel according to the upload channel parameter in the data model, and upload a file through the selected upload channel. In this embodiment, the home gateway may select a file upload channel according to the upload channel parameter in the data model, then send a file upload request through the selected file upload channel, and upload the file through the file upload channel.

In this embodiment, the terminal selects a file upload channel according to the upload channel parameter in the data model set by the management device, and uploads a file to the management device through the selected file upload channel, which can achieve the purpose of uploading the file to the correct file server by the terminal, thus improving flexibility of deploying and managing the server system by the operator.

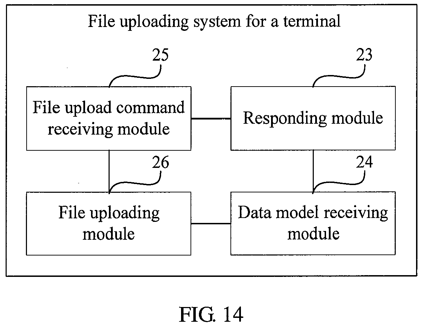

This embodiment also provides a file uploading system for a terminal, as shown in FIG. 14, where the system includes: a data model receiving module 24, configured to receive a data model configuration command sent by a management device, where the data model configuration command is used for setting an upload channel parameter in a data model; a file upload command receiving module 25, configured to receive a file upload command sent by the management device, where the file upload command includes an upload channel parameter; a file uploading module 26, configured to select a file upload channel according to the upload channel parameter in the data model received by the data model receiving module 24, and upload a file through the selected upload channel; and a responding module 23, configured to feed back a data model configuration command response message to the management device after the data model receiving module 24 receives the data model configuration command sent by the management device; and further configured to feed back a file upload command response message to the management device after the file upload command receiving module 25 receives the file upload command sent by the management device.

The sequence numbers of the foregoing embodiments of the present invention are merely for description purpose but do not indicate the preference of the embodiments.

Persons skilled in the art may clearly understand that the embodiments of the present invention may be implemented through software plus necessary universal hardware platform. Base on such an understanding, the technical solutions in the embodiments of the present invention essentially, or the part contributing to the prior art may be implemented in the form of a software product. The computer software product may be stored in a storage medium such as an ROM/RAM, a magnetic disk, or an optical disk, and include several instructions for instructing a computer device, which may be a personal computer, a server, or a network device, to perform the methods described in the embodiments of the present invention.

The foregoing embodiments are not intended to limit the present invention. For persons of ordinary skill in the art, any modification, equivalent replacement, and improvement made without departing from the present invention shall fall within the protection scope of the present invention.

## Claims

1. A file downloading method for a management device comprising:
sending (101, 501), by a management device, a file download command to a terminal, wherein the file download command comprises a download channel parameter indicating a network where a file server is deployed on;
receiving (102, 502), by the management device, a file download request message sent by the terminal;
selecting (103, 503), by the management device, a forwarding interface connected to the network which the file server is deployed on, according to download channel indication information in the file download request message, and forwarding (103, 503), by the management device, the file download request message to the file server through the forwarding interface, wherein the download channel indication information is set by the terminal according to the download channel parameter; and
forwarding (104, 507), by the management device, a file sent by the file server to the terminal.

2. The file downloading method for a terminal according to claim 1, wherein a method for setting the download channel indication information comprises: adding, by the terminal, a download channel identifier to the file download request message according to the download channel parameter; and
the selecting a forwarding interface according to the download channel indication information comprises: selecting a forwarding interface corresponding to an identifier value of the download channel identifier.

3. The file downloading method for a terminal according to claim 1, wherein a method for setting the download channel indication information comprises: when the download channel parameter indicates a default forwarding interface, not adding, by the terminal, a download channel identifier to the file download request message; or when the download channel parameter indicates a non-default forwarding interface, adding, by the terminal, a corresponding download channel identifier to the file download request message; and
the selecting a forwarding interface according to the download channel indication information comprises: selecting a default forwarding interface when the file download request message does not comprise a download channel identifier; or selecting a non-default forwarding interface corresponding to the download channel identifier when the file download request message comprises a download channel identifier.

4. The file downloading method for a terminal according to any one of claims 1-3, wherein the download channel parameter is a virtual local area network identifier or a service channel identifier or a communication interface identifier;
wherein the download channel parameter is set by a management system through a parameter setting command; and
before the receiving (102, 502) a file download request message sent by the terminal, the method further comprises:
receiving (505), by the management device, a file download command response message, wherein the file download command response message is generated after the terminal responds to the file download command; and
generating (506), by the management device, a parameter setting response message according to the file download command response message, and sending the parameter setting response message to the management system.

5. A file downloading method for a terminal, comprising:
receiving (301), by a terminal, a file download command sent by a management device, wherein the file download command comprises a download channel parameter indicating a network where a file server is deployed on;
setting (302), by the terminal, download channel indication information in a file download request message according to the download channel parameter;
sending (303), by the terminal, the file download request message, wherein the file download request message is forwarded to the file server by the management device through a forwarding interface selected according to the download channel indication information, wherein the forwarding interface is connected to the network which the file server is deployed on; and
receiving (304), by the terminal, a file sent by the file server.

6. The file downloading method for a terminal according to claim 5, wherein a method for setting download channel indication information comprises: adding a download channel identifier to the file download request message according to the download channel parameter; and
the selecting, by the management device, a forwarding interface for the file download request message comprises: selecting, by the management device, a forwarding interface corresponding to an identifier value of the download channel identifier.

7. The file downloading method for a terminal according to claim 5, wherein a method for setting download channel indication information comprises: when the download channel parameter indicates a default forwarding interface, not adding a download channel identifier to the file download request message; or when the download channel parameter indicates a non-default forwarding interface, adding a corresponding download channel identifier to the file download request message; and
the selecting, by the management device, a forwarding interface for the file download request message comprises: selecting, by the management device, a default forwarding interface when the file download request message does not comprise a download channel identifier; or selecting, by the management device, a non-default forwarding interface corresponding to the download channel identifier when the file download request message comprises a download channel identifier.

8. The file downloading method for a terminal according to any one of claims 5-7, wherein the download channel parameter is a virtual local area network identifier or a service channel identifier or a communication interface identifier;
wherein the download channel parameter is set by a management system through a parameter setting command.

9. A management device for file downloading, comprising:
a file download command sending module (21, 61), configured to send a file download command to a terminal, wherein the file download command comprises a download channel parameter indicating a network where a file server is deployed on;
a file download request message receiving module (22, 62), configured to receive a file download request message sent by the terminal;
a file download request message forwarding module (23, 63), configured to select a forwarding interface connected to the network which the file server is deployed on according to download channel indication information in the file download request message, and forward the file download request message to the file server through the forwarding interface, wherein the download channel indication information is set by the terminal according to the download channel parameter; and
a file forwarding module (24, 64), configured to forward a file sent by the file server to the terminal.

10. The management device according to claim 9, wherein the file download request message forwarding module is further configured to add a download channel identifier to the file download request message according to the download channel parameter, and
the file download request message forwarding module is further configured to select a forwarding interface corresponding to an identifier value of the download channel identifier; or
wherein the file download request message forwarding module is further configured to not add a download channel identifier to the file download request message when the download channel parameter indicates a default forwarding interface; or add a corresponding download channel identifier to the file download request message when the download channel parameter indicates a non-default forwarding interface; and
the file download request message forwarding module is further configured to select a default forwarding interface when the file download request message does not comprise a download channel identifier; or select a non-default forwarding interface corresponding to the download channel identifier when the file download request message comprises a download channel identifier.

11. The management device according to any one of claims 9-10, wherein the download channel parameter is a virtual local area network identifier or a service channel identifier or a communication interface identifier.

12. The management device according to claim 11, wherein the download channel parameter is set by a management system through a parameter setting command, and the management device further comprises:
a terminal response message receiving module (65), configured to receive a file download command response message, wherein the file download command response message is generated after the terminal responds to the file download command; and
a server response message sending module (66), configured to generate a parameter setting response message according to the file download command response message, and send the parameter setting response message to the management system.

13. A terminal for file downloading, comprising:
a file download command receiving module (41), configured to receive a file download command sent by a management device, wherein the file download command comprises a download channel parameter indicating a network where a file server is deployed on;
a download channel indication information setting module (42), configured to set download channel indication information in a file download request message according to the download channel parameter;
a file download request message sending module (43), configured to send the file download request message, wherein the file download request message is forwarded to the file server by the management device through a forwarding interface selected according to the download channel indication information, wherein the forwarding interface is connected to the network which the file server is deployed on; and
a file receiving module (44), configured to receive a file sent by the file server.

14. The terminal for file downloading according to claim 13, wherein the download channel indication information setting module is further configured to add a download channel identifier to the file download request message according to the download channel parameter; and
the management device selects a forwarding interface is further configured to select a forwarding interface corresponding to an identifier value of the download channel identifier; or
wherein the download channel indication information setting module is further configured to not add a download channel identifier to the file download request message when the download channel parameter indicates a default forwarding interface,; or add a corresponding download channel identifier to the file download request message when the download channel parameter indicates a non-default forwarding interface; and
the management device selects a forwarding interface is further configured to select a default forwarding interface when the file download request message does not comprise a download channel identifier; or select a non-default forwarding interface corresponding to the download channel identifier when the file download request message comprises a download channel identifier.

15. The terminal for file downloading according to any one of claims 13-14, wherein the download channel parameter is a virtual local area network identifier or a service channel identifier or a communication interface identifier;
wherein the download channel parameter is set by a management system through a parameter setting command.

## Patentansprüche

1. Datei-Herunterladeverfahren für eine Verwaltungsvorrichtung, umfassend:
Senden (101, 501) durch eine Verwaltungsvorrichtung eines Datei-Herunterladebefehls an ein Endgerät, wobei der Datei-Herunterladebefehl einen Herunterladekanalparameter umfasst, der ein Netz angibt, in welchem ein Dateiserver bereitgestellt wird;
Empfangen (102, 502) durch die Verwaltungsvorrichtung einer Datei-Herunterladeanforderungsnachricht, die vom Endgerät gesendet wird;
Auswählen (103, 503) durch die Verwaltungsvorrichtung einer Weiterleitungsschnittstelle, die mit dem Netz verbunden ist, in welchem der Dateiserver bereitgestellt wird, gemäß Herunterladekanalangabe-Informationen in der Datei-Herunterladeanforderungsnachricht, und Weiterleiten (103, 503) durch die Verwaltungsvorrichtung der Datei-Herunterladeanforderungsnachricht durch die Weiterleitungsschnittstelle an den Dateiserver, wobei die Herunterladekanalangabe-Informationen vom Endgerät gemäß dem Herunterladekanalparameter gesetzt werden; und
Weiterleiten (104, 507) durch die Verwaltungsvorrichtung einer Datei, die vom Dateiserver gesendet wird, an das Endgerät.

2. Datei-Herunterladeverfahren für ein Endgerät nach Anspruch 1, wobei ein Verfahren zum Setzen der Herunterladekanalangabe-Informationen umfasst: Hinzufügen durch das Endgerät einer Herunterladekanalkennung zur Datei-Herunterladeanforderungsnachricht gemäß dem Herunterladekanalparameter; und das Auswählen einer Weiterleitungsschnittstelle gemäß den Herunterladekanalangabe-Informationen umfasst: Auswählen einer Weiterleitungsschnittstelle, die einem Kennwert der Herunterladekanalkennung entspricht.

3. Datei-Herunterladeverfahren für ein Endgerät nach Anspruch 1, wobei ein Verfahren zum Setzen der Herunterladekanalangabe-Informationen umfasst: Nichthinzufügen durch das Endgerät einer Herunterladekanalkennung zur Datei-Herunterladeanforderungsnachricht, wenn der Herunterladekanalparameter eine standardmäßige Weiterleitungsschnittstelle angibt; oder Hinzufügen durch das Endgerät einer entsprechenden Herunterladekanalkennung zur Datei-Herunterladeanforderungsnachricht, wenn der Herunterladekanalparameter eine nicht standardmäßige Weiterleitungsschnittstelle angibt; und
das Auswählen einer Weiterleitungsschnittstelle gemäß den Herunterladekanalangabe-Informationen umfasst: Auswählen einer standardmäßigen Weiterleitungsschnittstelle, wenn die Datei-Herunterladeanforderungsnachricht keine Herunterladekanalkennung umfasst; oder Auswählen einer nicht standardmäßigen Weiterleitungsschnittstelle, die der Herunterladekanalkennung entspricht, wenn die Datei-Herunterladeanforderungsnachricht eine Herunterladekanalkennung umfasst.

4. Datei-Herunterladeverfahren für ein Endgerät nach einem der Ansprüche 1 bis 3, wobei der Herunterladekanalparameter eine VLAN(virtuelles lokales Netz)-Kennung oder eine Dienstkanalkennung oder eine Kommunikationsschnittstellenkennung ist; wobei der Herunterladekanalparameter von einem Verwaltungssystem durch einen Parametersetzbefehl gesetzt wird; und
das Verfahren vor dem Empfangen (102, 502) einer vom Endgerät gesendeten Datei-Herunterladeanforderungsnachricht ferner umfasst:
Empfangen (505) durch die Verwaltungsvorrichtung einer Datei-Herunterladebefehlsantwortnachricht, wobei die Datei-Herunterladebefehlsantwortnachricht nach dem Antworten des Endgeräts auf den Datei-Herunterladebefehl generiert wird; und
Generieren (506) durch die Verwaltungsvorrichtung einer Parametersetzantwortnachricht gemäß der Datei-Herunterladebefehlsantwortnachricht und Senden der Parametersetzantwortnachricht an das Verwaltungssystem.

5. Datei-Herunterladeverfahren für ein Endgerät, umfassend:
Empfangen (301) durch ein Endgerät eines Datei-Herunterladebefehls, der von einer Verwaltungsvorrichtung gesendet wird, wobei der Datei-Herunterladebefehl einen Herunterladekanalparameter umfasst, der ein Netz angibt, in welchem ein Dateiserver bereitgestellt wird;
Setzen (302) durch das Endgerät von Herunterladekanalangabe-Informationen in einer Datei-Herunterladeanforderungsnachricht gemäß dem Herunterladekanalparameter;
Senden (303) durch das Endgerät der Datei-Herunterladeanforderungsnachricht, wobei die Datei-Herunterladeanforderungsnachricht durch eine Weiterleitungsschnittstelle, die gemäß den Herunterladekanalangabe-Informationen ausgewählt wird, von der Verwaltungsvorrichtung an den Dateiserver weitergeleitet wird, wobei die Weiterleitungsschnittstelle mit dem Netz verbunden ist, in welchem der Dateiserver bereitgestellt wird; und
Empfangen (304) durch das Endgerät einer Datei, die vom Dateiserver gesendet wird.

6. Datei-Herunterladeverfahren für ein Endgerät nach Anspruch 5, wobei ein Verfahren zum Setzen von Herunterladekanalangabe-Informationen umfasst: Hinzufügen einer Herunterladekanalkennung zur Datei-Herunterladeanforderungsnachricht gemäß dem Herunterladekanalparameter; und
das Auswählen durch die Verwaltungsvorrichtung einer Weiterleitungsschnittstelle für die Datei-Herunterladeanforderungsnachricht umfasst: Auswählen durch die Verwaltungsvorrichtung einer Weiterleitungsschnittstelle, die einem Kennwert der Herunterladekanalkennung entspricht.

7. Datei-Herunterladeverfahren für ein Endgerät nach Anspruch 5, wobei ein Verfahren zum Setzen von Herunterladekanalangabe-Informationen umfasst: Nichthinzufügen einer Herunterladekanalkennung zur Datei-Herunterladeanforderungsnachricht, wenn der Herunterladekanalparameter eine standardmäßige Weiterleitungsschnittstelle angibt; oder Hinzufügen einer entsprechenden Herunterladekanalkennung zur Datei-Herunterladeanforderungsnachricht, wenn der Herunterladekanalparameter eine nicht standardmäßige Weiterleitungsschnittstelle angibt; und
das Auswählen durch die Verwaltungsvorrichtung einer Weiterleitungsschnittstelle für die Datei-Herunterladeanforderungsnachricht umfasst: Auswählen durch die Verwaltungsvorrichtung einer standardmäßigen Weiterleitungsschnittstelle, wenn die Datei-Herunterladeanforderungsnachricht keine Herunterladekanalkennung umfasst; oder Auswählen durch die Verwaltungsvorrichtung einer nicht standardmäßigen Weiterleitungsschnittstelle, die der Herunterladekanalkennung entspricht, wenn die Datei-Herunterladeanforderungsnachricht eine Herunterladekanalkennung umfasst.

8. Datei-Herunterladeverfahren für ein Endgerät nach einem der Ansprüche 5 bis 7, wobei der Herunterladekanalparameter eine VLAN(virtuelles lokales Netz)-Kennung oder eine Dienstkanalkennung oder eine Kommunikationsschnittstellenkennung ist; wobei der Herunterladekanalparameter von einem Verwaltungssystem durch einen Parametersetzbefehl gesetzt wird.

9. Verwaltungsvorrichtung zum Herunterladen von Dateien, umfassend:
ein Datei-Herunterladebefehls-Sendemodul (21, 61), das so konfiguriert ist, dass es einen Datei-Herunterladebefehl an ein Endgerät sendet, wobei der Datei-Herunterladebefehl einen Herunterladekanalparameter umfasst, der ein Netz angibt, in welchem ein Dateiserver bereitgestellt wird;
ein Datei-Herunterladeanforderungsnachrichten-Empfangsmodul (22, 62), das so konfiguriert ist, dass es eine Datei-Herunterladeanforderungsnachricht empfängt, die vom Endgerät gesendet wird;
ein Datei-Herunterladeanforderungsnachrichten-Weiterleitungsmodul (23, 63), das so konfiguriert ist, dass es eine Weiterleitungsschnittstelle, die mit dem Netz verbunden ist, in welchem der Dateiserver bereitgestellt wird, gemäß Herunterladekanalangabe-Informationen in der Datei-Herunterladeanforderungsnachricht auswählt und die Datei-Herunterladeanforderungsnachricht durch die Weiterleitungsschnittstelle an den Dateiserver weiterleitet, wobei die Herunterladekanalangabe-Informationen vom Endgerät gemäß dem Herunterladekanalparameter gesetzt werden; und
ein Datei-Weiterleitungsmodul (24, 64), das so konfiguriert ist, dass es eine Datei, die vom Dateiserver gesendet wird, an das Endgerät weiterleitet.

10. Verwaltungsvorrichtung nach Anspruch 9, wobei das Datei-Herunterladeanforderungsnachrichten-Weiterleitungsmodul ferner so konfiguriert ist, dass es eine Herunterladekanalkennung zur Datei-Herunterladeanforderungsnachricht gemäß dem Herunterladekanalparameter hinzufügt, und
das Datei-Herunterladeanforderungsnachrichten-Weiterleitungsmodul ferner so konfiguriert ist, dass es eine Weiterleitungsschnittstelle gemäß einem Kennwert der Herunterladekanalkennung auswählt; oder
wobei das Datei-Herunterladeanforderungsnachrichten-Weiterleitungsmodul ferner so konfiguriert ist, dass es keine Herunterladekanalkennung zur Datei-Herunterladeanforderungsnachricht hinzufügt, wenn der Herunterladekanalparameter eine standardmäßige Weiterleitungsschnittstelle angibt; oder eine entsprechende Herunterladekanalkennung zur Datei-Herunterladeanforderungsnachricht hinzufügt, wenn der Herunterladekanalparameter eine nicht standardmäßige Weiterleitungsschnittstelle angibt; und
das Datei-Herunterladeanforderungsnachrichten-Weiterleitungsmodul ferner so konfiguriert ist, dass es eine standardmäßige Weiterleitungsschnittstelle auswählt, wenn die Datei-Herunterladeanforderungsnachricht keine Herunterladekanalkennung umfasst; oder eine nicht standardmäßige Weiterleitungsschnittstelle auswählt, die der Herunterladekanalkennung entspricht, wenn die Datei-Herunterladeanforderungsnachricht eine Herunterladekanalkennung umfasst.

11. Verwaltungsvorrichtung nach einem der Ansprüche 9 bis 10, wobei der Herunterladekanalparameter eine VLAN(virtuelles lokales Netz)-Kennung oder eine Dienstkanalkennung oder eine Kommunikationsschnittstellenkennung ist.

12. Verwaltungsvorrichtung nach Anspruch 11, wobei der Herunterladekanalparameter von einem Verwaltungssystem durch einen Parametersetzbefehl gesetzt wird, und die Verwaltungsvorrichtung ferner umfasst:
ein Endgerät-Antwortnachrichten-Empfangsmodul (65), das so konfiguriert ist, dass es eine Datei-Herunterladebefehlsantwortnachricht empfängt, wobei die Datei-Herunterladebefehlsantwortnachricht nach dem Antworten des Endgeräts auf den Datei-Herunterladebefehl generiert wird; und
ein Server-Antwortnachrichten-Sendemodul (66), das so konfiguriert ist, dass es eine Parametersetzantwortnachricht gemäß der Datei-Herunterladebefehlsantwortnachricht generiert und die Parametersetzantwortnachricht an das Verwaltungssystem sendet.

13. Endgerät zum Herunterladen von Dateien, umfassend:
ein Datei-Herunterladebefehls-Empfangsmodul (41), das so konfiguriert ist, dass es einen Datei-Herunterladebefehl empfängt, der von einer Verwaltungsvorrichtung gesendet wird, wobei der Datei-Herunterladebefehl einen Herunterladekanalparameter umfasst, der ein Netz angibt, in welchem ein Dateiserver bereitgestellt wird;
ein Herunterladekanalangabe-Informationssetzmodul (42), das so konfiguriert ist, dass es Herunterladekanalangabe-Informationen in einer Datei-Herunterladeanforderungsnachricht gemäß dem Herunterladekanalparameter setzt;
ein Datei-Herunterladeanforderungsnachrichten-Sendemodul (43), das so konfiguriert ist, dass es die Datei-Herunterladeanforderungsnachricht sendet, wobei die Datei-Herunterladeanforderungsnachricht durch eine Weiterleitungsschnittstelle, die gemäß den Herunterladekanalangabe-Informationen ausgewählt wird, von der Verwaltungsvorrichtung an den Dateiserver weitergeleitet wird, wobei die Weiterleitungsschnittstelle mit dem Netz verbunden ist, in welchem der Dateiserver bereitgestellt wird; und
ein Datei-Empfangsmodul (44), das so konfiguriert ist, dass es eine Datei empfängt, die vom Dateiserver gesendet wird.

14. Endgerät zum Herunterladen von Dateien nach Anspruch 13, wobei das Herunterladekanalangabe-Informationssetzmodul ferner so konfiguriert ist, dass es eine Herunterladekanalkennung zur Datei-Herunterladeanforderungsnachricht gemäß dem Herunterladekanalparameter hinzufügt; und
die Verwaltungsvorrichtung, die eine Weiterleitungsschnittstelle auswählt, ferner so konfiguriert ist, dass sie eine Weiterleitungsschnittstelle auswählt, die einem Kennwert der Herunterladekanalkennung entspricht; oder
wobei das Herunterladekanalangabe-Informationssetzmodul ferner so konfiguriert ist, dass es keine Herunterladekanalkennung zur Datei-Herunterladeanforderungsnachricht hinzufügt, wenn der Herunterladekanalparameter eine standardmäßige Weiterleitungsschnittstelle angibt; oder eine entsprechende Herunterladekanalkennung zur Datei-Herunterladeanforderungsnachricht hinzufügt, wenn der Herunterladekanalparameter eine nicht standardmäßige Weiterleitungsschnittstelle angibt; und
die Verwaltungsvorrichtung, die eine Weiterleitungsschnittstelle auswählt, ferner so konfiguriert ist, dass sie eine standardmäßige Weiterleitungsschnittstelle auswählt, wenn die Datei-Herunterladeanforderungsnachricht keine Herunterladekanalkennung umfasst; oder eine nicht standardmäßige Weiterleitungsschnittstelle auswählt, die der Herunterladekanalkennung entspricht, wenn die Datei-Herunterladeanforderungsnachricht eine Herunterladekanalkennung umfasst.

15. Endgerät zum Herunterladen von Dateien nach einem der Ansprüche 13 bis 14, wobei der Herunterladekanalparameter eine VLAN(virtuelles lokales Netz)-Kennung oder eine Dienstkanalkennung oder eine Kommunikationsschnittstellenkennung ist; wobei der Herunterladekanalparameter von einem Verwaltungssystem durch einen Parametersetzbefehl gesetzt wird.

## Revendications

1. Procédé de téléchargement de fichier pour un dispositif de gestion, comprenant les étapes suivantes :
envoyer (101, 501), par un dispositif de gestion, une commande de téléchargement de fichier à un terminal, où la commande de téléchargement de fichier comprend un paramètre de canal de téléchargement indiquant un réseau au niveau duquel un serveur de fichiers est déployé ;
recevoir (102, 502), par le dispositif de gestion, un message de demande de téléchargement de fichier envoyé par le terminal ;
sélectionner (103, 503), par le dispositif de gestion, une interface de transfert connectée au réseau au niveau duquel le serveur de fichiers est déployé, en fonction d'informations d'indication de canal de téléchargement dans le message de demande de téléchargement de fichier, et transférer (103, 503), par le dispositif de gestion, le message de demande de téléchargement de fichier au serveur de fichiers par l'intermédiaire de l'interface de transfert, où les informations d'indication de canal de téléchargement sont définies par le terminal en fonction du paramètre de canal de téléchargement ; et
transférer (104, 507), par le dispositif de gestion, un fichier envoyé par le serveur de fichiers au terminal.

2. Procédé de téléchargement de fichier pour un terminal selon la revendication 1, dans lequel un procédé pour définir les informations d'indication de canal de téléchargement comprend l'étape suivante : ajouter, par le terminal, un identifiant de canal de téléchargement au message de demande de téléchargement de fichier en fonction du paramètre de canal de téléchargement ; et
la sélection d'une interface de transfert en fonction des informations d'indication de canal de téléchargement comprend l'étape suivante : sélectionner une interface de transfert correspondant à une valeur d'identifiant de l'identifiant de canal de téléchargement.

3. Procédé de téléchargement de fichier pour un terminal selon la revendication 1, dans lequel un procédé pour définir les informations d'indication de canal de téléchargement comprend les étapes suivantes : lorsque le paramètre de canal de téléchargement indique une interface de transfert par défaut, ne pas ajouter, par le terminal, d'identifiant de canal de téléchargement au message de demande de téléchargement de fichier ; ou, lorsque le paramètre de canal de téléchargement indique une interface de transfert non par défaut, ajouter, par le terminal, un identifiant de canal de téléchargement correspondant au message de demande de téléchargement de fichier ; et
la sélection d'une interface de transfert en fonction des informations d'indication de canal de téléchargement comprend les étapes suivantes : sélectionner une interface de transfert par défaut lorsque le message de demande de téléchargement de fichier ne comprend pas d'identifiant de canal de téléchargement ; ou sélectionner une interface de transfert non par défaut correspondant à l'identifiant de canal de téléchargement lorsque le message de demande de téléchargement de fichier comprend un identifiant de canal de téléchargement.

4. Procédé de téléchargement de fichier pour un terminal selon l'une quelconque des revendications 1 à 3, dans lequel le paramètre de canal de téléchargement est un identifiant de réseau local virtuel ou un identifiant de canal de service ou un identifiant d'interface de communication ;
où le paramètre de canal de téléchargement est défini par un système de gestion par l'intermédiaire d'une commande de définition de paramètre ; et
avant la réception (102, 502) d'un message de demande de téléchargement de fichier envoyé par le terminal, le procédé comprend en outre les étapes suivantes :
recevoir (505), par le dispositif de gestion, un message de réponse de commande de téléchargement de fichier, où le message de réponse de commande de téléchargement de fichier est généré après que le terminal a répondu à la commande de téléchargement de fichier ; et
générer (506), par le dispositif de gestion, un message de réponse de définition de paramètre en fonction du message de réponse de commande de téléchargement de fichier, et envoyer le message de réponse de définition de paramètre au système de gestion.

5. Procédé de téléchargement de fichier pour un terminal comprenant les étapes suivantes :
recevoir (301), par un terminal, une commande de téléchargement de fichier envoyée par un dispositif de gestion, où la commande de téléchargement de fichier comprend un paramètre de canal de téléchargement indiquant un réseau au niveau duquel un serveur de fichiers est déployé ;
définir (302), par le terminal, des informations d'indication de canal de téléchargement dans un message de demande de téléchargement de fichier en fonction du paramètre de canal de téléchargement ;
envoyer (303), par le terminal, le message de demande de téléchargement de fichier, où le message de demande de téléchargement de fichier est transféré au serveur de fichiers par le dispositif de gestion par l'intermédiaire d'une interface de transfert sélectionnée selon les informations d'indication de canal de téléchargement, où l'interface de transfert est connectée au réseau au niveau duquel le serveur de fichiers est déployé ; et
recevoir (304), par le terminal, un fichier envoyé par le serveur de fichiers.

6. Procédé de téléchargement de fichier pour un terminal selon la revendication 5, dans lequel un procédé pour définir des informations d'indication de canal de téléchargement comprend l'étape suivante : ajouter un identifiant de canal de téléchargement au message de demande de téléchargement de fichier en fonction du paramètre de canal de téléchargement ; et
la sélection, par le dispositif de gestion, d'une interface de transfert pour le message de demande de téléchargement de fichier comprend l'étape suivante : sélectionner, par le dispositif de gestion, une interface de transfert correspondant à une valeur d'identifiant de l'identifiant de canal de téléchargement.

7. Procédé de téléchargement de fichier pour un terminal selon la revendication 5, dans lequel un procédé pour définir des informations d'indication de canal de téléchargement comprend les étapes suivantes : lorsque le paramètre de canal de téléchargement indique une interface de transfert par défaut, ne pas ajouter d'identifiant de canal de téléchargement au message de demande de téléchargement de fichier ; ou, lorsque le paramètre de canal de téléchargement indique une interface de transfert non par défaut, ajouter un identifiant de canal de téléchargement correspondant au message de demande de téléchargement de fichier ; et
la sélection, par le dispositif de gestion, d'une interface de transfert pour le message de demande de téléchargement de fichier comprend les étapes suivantes : sélectionner, par le dispositif de gestion, une interface de transfert par défaut lorsque le message de demande de téléchargement de fichier ne comprend pas d'identifiant de canal de téléchargement ; ou sélectionner, par le dispositif de gestion, une interface de transfert non par défaut correspondant à l'identifiant de canal de téléchargement lorsque le message de demande de téléchargement de fichier comprend un identifiant de canal de téléchargement.

8. Procédé de téléchargement de fichier pour un terminal selon l'une quelconque des revendications 5 à 7, dans lequel le paramètre de canal de téléchargement est un identifiant de réseau local virtuel ou un identifiant de canal de service ou un identifiant d'interface de communication ;
où le paramètre de canal de téléchargement est défini par un système de gestion par l'intermédiaire d'une commande de définition de paramètre.

9. Dispositif de gestion pour téléchargement de fichier, comprenant :
un module d'envoi de commande de téléchargement de fichier (21, 61), configuré pour envoyer une commande de téléchargement de fichier à un terminal, où la commande de téléchargement de fichier comprend un paramètre de canal de téléchargement indiquant un réseau au niveau duquel un serveur de fichiers est déployé ;
un module de réception de message de demande de téléchargement de fichier (22, 62), configuré pour recevoir un message de demande de téléchargement de fichier envoyé par le terminal ;
un module de transfert de message de demande de téléchargement de fichier (23, 63), configuré pour sélectionner une interface de transfert connectée au réseau au niveau duquel le serveur de fichiers est déployé, en fonction d'informations d'indication de canal de téléchargement dans le message de demande de téléchargement de fichier, et transférer le message de demande de téléchargement de fichier au serveur de fichiers par l'intermédiaire de l'interface de transfert, où les informations d'indication de canal de téléchargement sont définies par le terminal en fonction du paramètre de canal de téléchargement ; et
un module de transfert de fichier (24, 64), configuré pour transférer un fichier envoyé par le serveur de fichiers au terminal.

10. Dispositif de gestion selon la revendication 9, dans lequel le module de transfert de message de demande de téléchargement de fichier est en outre configuré pour ajouter un identifiant de canal de téléchargement au message de demande de téléchargement de fichier en fonction du paramètre de canal de téléchargement ; et
le module de transfert de message de demande de téléchargement de fichier est en outre configuré pour sélectionner une interface de transfert correspondant à une valeur d'identifiant de l'identifiant de canal de téléchargement ; ou
dans lequel le module de transfert de message de demande de téléchargement de fichier est en outre configuré pour ne pas ajouter d'identifiant de canal de téléchargement au message de demande de téléchargement de fichier lorsque le paramètre de canal de téléchargement indique une interface de transfert par défaut ; ou pour ajouter un identifiant de canal de téléchargement correspondant au message de demande de téléchargement de fichier lorsque le paramètre de canal de téléchargement indique une interface de transfert non par défaut ; et
le module de transfert de message de demande de téléchargement de fichier est en outre configuré pour sélectionner une interface de transfert par défaut lorsque le message de demande de téléchargement de fichier ne comprend pas d'identifiant de canal de téléchargement ; ou pour sélectionner une interface de transfert non par défaut correspondant à l'identifiant de canal de téléchargement lorsque le message de demande de téléchargement de fichier comprend un identifiant de canal de téléchargement.

11. Dispositif de gestion selon l'une quelconque des revendications 9 à 10, dans lequel le paramètre de canal de téléchargement est un identifiant de réseau local virtuel ou un identifiant de canal de service ou un identifiant d'interface de communication.

12. Dispositif de gestion selon la revendication 11, dans lequel le paramètre de canal de téléchargement est défini par un système de gestion par l'intermédiaire d'une commande de définition de paramètre, et le dispositif de gestion comprend en outre :
un module de réception de message de réponse de terminal (65), configuré pour recevoir un message de réponse de commande de téléchargement de fichier, où le message de réponse de commande de téléchargement de fichier est généré après que le terminal a répondu à la commande de téléchargement de fichier ; et
un module d'envoi de message de réponse de serveur (66), configuré pour générer un message de réponse de définition de paramètre en fonction du message de réponse de commande de téléchargement de fichier, et pour envoyer le message de réponse de définition de paramètre au système de gestion.

13. Terminal pour téléchargement de fichier comprenant :
un module de réception de commande de téléchargement de fichier (41), configuré pour recevoir une commande de téléchargement de fichier envoyée par un dispositif de gestion, où la commande de téléchargement de fichier comprend un paramètre de canal de téléchargement indiquant un réseau au niveau duquel un serveur de fichiers est déployé ;
un module de définition d'informations d'indication de canal de téléchargement (42), configuré pour définir des informations d'indication de canal de téléchargement dans un message de demande de téléchargement de fichier en fonction du paramètre de canal de téléchargement ;
un module d'envoi de message de demande de téléchargement de fichier (43), configuré pour envoyer le message de demande de téléchargement de fichier, où le message de demande de téléchargement de fichier est transféré au serveur de fichiers par le dispositif de gestion par l'intermédiaire d'une interface de transfert sélectionnée selon les informations d'indication de canal de téléchargement, où l'interface de transfert est connectée au réseau au niveau duquel le serveur de fichiers est déployé ; et
un module de réception de fichier (44), configuré pour recevoir un fichier envoyé par le serveur de fichiers.

14. Terminal pour téléchargement de fichier selon la revendication 13, dans lequel le module de définition d'informations d'indication de canal de téléchargement est en outre configuré pour ajouter un identifiant de canal de téléchargement au message de demande de téléchargement de fichier en fonction du paramètre de canal de téléchargement ; et
le dispositif de gestion sélectionne une interface de transfert et est en outre configuré pour sélectionner une interface de transfert correspondant à une valeur d'identifiant de l'identifiant de canal de téléchargement ; ou
dans lequel le module de définition d'informations d'indication de canal de téléchargement est en outre configuré pour ajouter un identifiant de canal de téléchargement au message de demande de téléchargement lorsque le paramètre de canal de téléchargement indique une interface de transfert par défaut ; ou ajouter un identifiant de canal de téléchargement correspondant au message de demande de téléchargement de fichier lorsque le paramètre de canal de téléchargement indique une interface de transfert non par défaut ; et
le dispositif de gestion sélectionne une interface de transfert et est en outre configuré pour sélectionner une interface de transfert par défaut lorsque le message de demande de téléchargement de fichier ne comprend pas d'identifiant de canal de téléchargement lorsque le message de demande de téléchargement de fichier comprend un identifiant de canal de téléchargement.

15. Terminal pour téléchargement de fichier selon l'une quelconque des revendications 13 à 14, où le paramètre de canal de téléchargement est un identifiant de réseau local virtuel ou un identifiant de canal de service ou un identifiant d'interface de communication ;
où le paramètre de canal de téléchargement est défini par un système de gestion par l'intermédiaire d'une commande de définition de paramètre.
